# EUROPEAN PATENT APPLICATION

(11) **EP 4 661 504 A1**
(43) Date of publication of application: **10.12.2025**
(21) Application number: 23919098.6
(22) Date of filing: 03.02.2023
(51) Int. Cl.: H04W 48/20

(54) **WIRELESS COMMUNICATION METHOD, AND DEVICES**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN)
(74) Representative: RGTH
(86) International application number: PCT/CN2023/074399
(87) International publication number: WO 2024/159522

(57) **Abstract**

A wireless communication method, and devices. The method comprises: an environmental energy Internet-of-Things device receiving first indication information, wherein the first indication information is used for indicating access control information of a target cell or a target basic service set (BSS).

## Description

### TECHNICAL FIELD

Embodiments of the present application relate to the field of communications, and specifically to, wireless communication methods and devices.

### BACKGROUND

A zero power consumption terminal, owing to significant advantages such as ultra-low cost, zero power consumption and small size, may be widely applied in various industries such as logistics, smart warehousing, smart agriculture, power and electricity, and industrial Internet of Things for vertical industries, as well as personal applications such as smart wearables and smart homes. The zero power consumption terminal needs to access a system first for communication. Given that the capabilities of zero power consumption terminals are different from those of traditional terminals, and the zero power consumption terminals may also have different capabilities from each other, how to implement access control on zero power consumption devices is an urgent problem to be solved.

### SUMMARY

The present application provides wireless communication methods and devices, capable of implementing appropriate access control on a zero power consumption device.

In a first aspect, a wireless communication method is provided, which includes: receiving, by an ambient power-enabled Internet of Things device, first indication information, where the first indication information is used for indicating access control information of a target cell or a target basic service set (BSS).

In a second aspect, a wireless communication method is provided, which includes: transmitting, by a network device, first indication information, where the first indication information is used for indicating control information enabling an ambient power-enabled Internet of Things device to access a target cell.

In a third aspect, a terminal device is provided, which is used to perform the method in the first aspect or in various implementations thereof.

Specifically, the terminal device includes a functional module for performing the method in the first aspect or in various implementations thereof.

In a fourth aspect, a network device is provided, which is used to perform the method in the second aspect or in various implementations thereof.

Specifically, the network device includes a functional module for performing the method in the second aspect or in various implementations.

In a fifth aspect, a terminal device is provided, which includes a processor and a memory. The memory is used to store a computer program, and the processor is used to call the computer program stored in the memory and run the computer program, to perform the method in the first aspect or in various implementations thereof.

In a sixth aspect, a network device is provided, which includes a processor and a memory. The memory is used to store a computer program, and the processor is used to call the computer program stored in the memory and run the computer program, to perform the method in the second aspect or in various implementations thereof.

In a seventh aspect, a chip is provided, which is used to implement the method in any one of the first aspect to the second aspect or in various implementations thereof.

Specifically, the chip includes: a processor, which is used to call a computer program from a memory and run the computer program, to enable a device equipped with an apparatus to perform the method in any one of the first aspect to the second aspect or in various implementations thereof.

In an eighth aspect, a computer-readable storage medium is provided, which is used to store a computer program, where the computer program enables a computer to perform the method in any one of the first aspect to the second aspect or in various implementations thereof.

In a ninth aspect, a computer program product is provided, which includes computer program instructions, where the computer program instructions enable a computer to perform the method in any one of the first aspect to the second aspect or in various implementations thereof.

In a tenth aspect, a computer program is provided, where the computer program, when performed on a computer, enables the computer to perform the method in any one of the first aspect to the second aspect or in various implementations thereof.

Through above technical solutions, the ambient power-enabled Internet of Things device may access the target cell or the target BSS according to the access control information of the network device, which is beneficial for ensuring that the ambient power-enabled Internet of Things device accesses an appropriate cell or BSS, to ensure normal communication of the ambient power-enabled Internet of Things device.

### BRIEF DESCRIPTION OF THE DRAWINGS

FIG. 1 is a schematic diagram of a communication system architecture provided in embodiments of the present application.
FIG. 2 is a schematic diagram of a zero power consumption communication system in accordance with an example of the present application.
FIG. 3 is a principle diagram of power harvesting in accordance with an embodiment of the present application.
FIG. 4 is a principle diagram of backscatter communication in accordance with an embodiment of the present application.
FIG. 5 is a circuit principle diagram of resistive load modulation in accordance with an embodiment of the present application.
FIG. 6 is a schematic diagram of a wireless communication method provided in accordance with the embodiments of the present application.
FIG. 7 is a schematic diagram of another wireless communication method provided in accordance with the embodiments of the present application.
FIG. 8 is a schematic block diagram of an ambient power-enabled Internet of Things device provided in accordance with embodiments of the present application.
FIG. 9 is a schematic block diagram of a network device provided in accordance with the embodiments of the present application.
FIG. 10 is a schematic block diagram of a communication device provided in accordance with the embodiments of the present application.
FIG. 11 is a schematic block diagram of a chip provided in accordance with the embodiments of the present application.
FIG. 12 is a schematic block diagram of a communication system provided in accordance with the embodiments of the present application.

### DETAILED DESCRIPTION

Technical solutions in the embodiments of the present application will be described below in conjunction with the accompanying drawings in the embodiments of the present application. It is apparent that the described embodiments are merely part but not all of the embodiments of the present application. With respect to the embodiments in this application, all other embodiments obtained by those skilled in the art without creative efforts shall fall within the protection of the present application.

The technical solutions of the embodiments of the present application may be applied to various communication systems such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Network, NTN) system, a universal mobile telecommunication system (UMTS), wireless local area networks (WLANs), wireless fidelity (Wi-Fi), a fifth-generation (5th-Generation, 5G) communication system, a cellular Internet of Things system, a cellular passive Internet of Things system, or other communication systems.

Generally speaking, traditional communication systems support a limited quantity of connections, which is easy to be implemented. However, with development of the communication technology, mobile communication systems will support not only the traditional communication, but also, for example, device to device (D2D) communication, machine to machine (M2M) communication, machine-type communication (MTC), vehicle to vehicle (V2V) communication, vehicle to everything (V2X) communication, or the like. The embodiments of the present application may also be applied to these communication systems.

Optionally, a communication system in the embodiments of the present application may be applied to a carrier aggregation (CA) scenario, may also be applied to a dual connectivity (DC) scenario, and may also be applied to a standalone (SA) network deployment scenario.

Optionally, a communication system in the embodiments of the present application may be applied to an unlicensed spectrum, where the unlicensed spectrum may also be considered as a shared spectrum; alternatively, the communication system in the embodiments of the present application may be applied to a licensed spectrum, where the licensed spectrum may also be considered as an unshared spectrum.

In the embodiments of the present application, various embodiments are described in conjunction with a network device and a terminal device, where the terminal device may also be referred to as user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

In the embodiments of the present application, the network device may be a device used for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or an access point, a network device (gNB) in an in-vehicle device, wearable device or NR network, a network device in the cellular Internet of Things, a network device in the cellular passive Internet of Things, a network device in a future evolved PLMN network, a network device in the NTN network, or the like.

As an example but not a limitation, in the embodiments of the present application, the network device may have mobile characteristics. For example, the network device may be a movable device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station disposed on land, water and other places.

In the embodiments of the present application, the network device may provide services for a cell, and the terminal device communicates with the network device through transmission resources (e.g., frequency domain resources, or spectrum resources) used by the cell. The cell may be a cell corresponding to the network device (e.g., a base station). The cell may belong to a macro base station or may belong to a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

The terminal device may be a station (STATION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, an in-vehicle device, a wearable device, a terminal device in next-generation communication system (e.g., the NR network), a terminal device in the future evolved public land mobile network (PLMN), a terminal device in the cellular Internet of Things, a terminal device in the cellular passive Internet of Things, or the like.

In the embodiments of the present application, the terminal device may be deployed on land, including indoors or outdoors, handheld, wearable, or in-vehicle; alternatively, the terminal device may be deployed on water (e.g., on a steamship); alternatively, the terminal device may be deployed in air (e.g., on an airplane, balloon, or satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present disclosure, the terminal device may be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also fulfills powerful functions through software support as well as data interaction or cloud interaction. Generalized wearable smart devices include full-featured and large-sized devices that are capable of implementing full or partial functionality without relying on smart phones, such as a smart watch or smart glasses, and devices that focus on application functionality of a certain type only and need to be used in conjunction with other devices (such as smart phones), such as various smart bracelets or smart jewelries for monitoring physical signs.

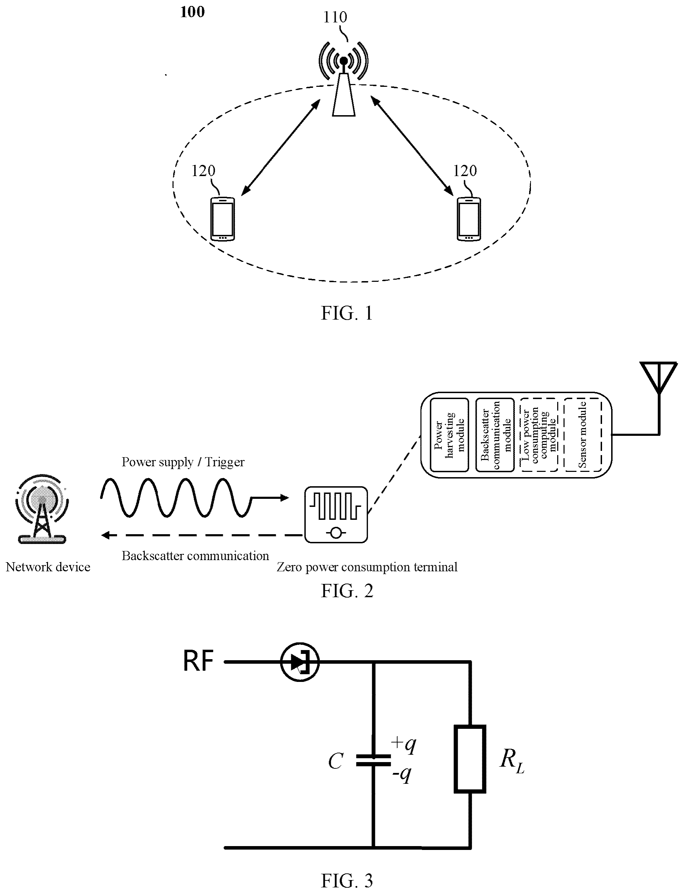

For example, a communication system 100 to which the embodiments of the present application are applied is illustrated in FIG. 1. The communication system 100 may include a network device 110, and the communication system 100 may be a device for communicating with terminal devices 120 (or referred to as communication terminals or terminals). The network device 110 may provide communication coverage for a specific geographical area and may communicate with terminal devices located within the coverage area.

FIG. 1 exemplarily illustrates one network device and two terminal devices. Optionally, the communication system 100 may include multiple network devices and another number of terminal devices may be included within a coverage area of each network device, which is not limited in the embodiments of the present application.

Optionally, the communication system 100 may further include other network entities such as a network controller and a mobility management entity, which is not limited in the embodiments of the present application.

It should be understood that a device with a communication function in a network/system in the embodiments of the present application may be referred to as a communication device. Taking the communication system 100 illustrated in FIG. 1 as an example, the communication device may include a network device 110 and terminal devices 120 with communication functions. The network device 110 and the terminal devices 120 may be the specific devices described above, which will not be repeated here; and the communication device may further include other devices in the communication system 100, such as the network controller, the mobile management entity and other network entities, which is not limited in the embodiments of the present application.

It should be understood that the terms "system" and "network" are often used interchangeably herein. The term "and/or" herein is only an association relationship to describe associated objects, indicating that there may be three kinds of relationships between associated objects, for example, "A and/or B" may represent three cases: A exists alone, both A and B exist, and B exists alone. In addition, a character "/" herein generally indicates that the associated objects before and after this character are in an "or" relationship.

It should be understood that "indicate" mentioned in the embodiments of the present disclosure may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present application, "predefined" may be implemented by pre-storing corresponding codes, forms or other means used for indicating relevant information in devices (e.g., including a terminal device and a network device), the specific implementation of which will not be limited in the present disclosure. For example, predefined may refer to what is defined in a protocol.

In the embodiments of the present application, the term "protocol" may refer to a standard protocol in the field of communication, for example, the "protocol" may include an LTE protocol, an NR protocol, and related protocols applied in future communication systems, which will not be limited in the present application.

To facilitate understanding of the technical solutions in the embodiments of the present application, the related technologies of the present application will be described below.

### 1. Zero power consumption communication

The key technologies of the zero power consumption communication include power harvesting, backscatter communication and low power consumption technology.

As illustrated in FIG. 2, a typical zero power consumption communication system (e.g., a radio frequency identification (RFID) system) includes a network device (e.g., a reader/writer of the RFID system) and a zero power consumption terminal (e.g., an electronic tag). The network device is used to transmit a wireless power supply signal and a downlink communication signal to the zero power consumption terminal, and receive a backscatter signal from the zero power consumption terminal. A basic zero power consumption terminal includes a power harvesting module, a backscatter communication module, and a low power consumption calculating module. In addition, the zero power consumption terminal may further have a memory or a sensor for storing basic information (e.g., an object identification) or sensing data such as ambient temperature and ambient humidity.

For example, the power harvesting module may harvest power carried by radio waves (radio waves emitted by the network device illustrated in FIG. 2) in space to drive the low power consumption calculating module of the zero power consumption terminal and implement backscatter communication. After acquiring power, the zero power consumption terminal may receive a control command from the network device and transmit data to the network device based on the control signaling by means of backscattering. The transmitted data may be data stored in the zero power consumption terminal itself (e.g., an identifier, or pre-written information such as production date, brand or manufacturer of a product). The zero power consumption terminal may also be equipped with various sensors, so as to report data collected by various sensors based on zero power consumption mechanism.

The key technologies of the zero power consumption communication will be described as follows.

### 1. RF Power Harvesting

As illustrated in FIG. 3, a radio frequency power harvesting module harvests power of electromagnetic waves in space based on a principle of electromagnetic induction, so as to acquire power required for driving the zero power consumption terminal to work, for example, for driving a low power demodulation and modulation module, a sensor, and memory reading. Therefore, the zero power consumption terminal does not need a traditional battery.

### 2. Backscatter communication (Backscattering)

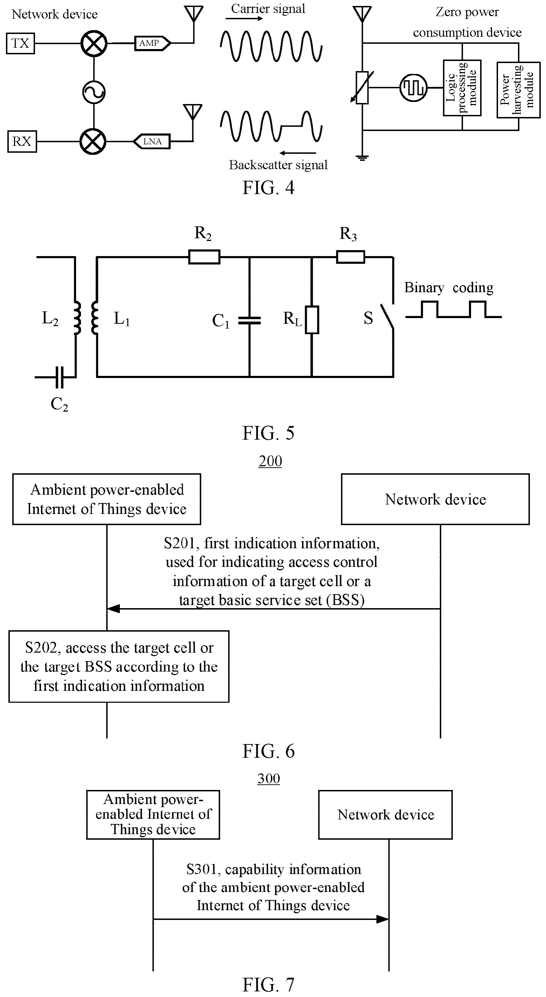

As illustrated in FIG. 4, the zero power consumption terminal receives a carrier signal transmitted by the network device, modulates the carrier signal, loads information to be transmitted and radiates the modulated signal by an antenna. This information transmission process is referred to as backscatter communication. Backscattering and load modulation functions are inseparable. The load modulation adjusts and controls circuit parameters of an oscillation loop of the zero power consumption terminal according to rhythm of data stream, enabling parameters such as impedance of the zero power consumption terminal to change accordingly, thereby completing the modulation process. The load modulation technology mainly includes two manners: resistive load modulation and capacitive load modulation. For the resistive load modulation, a load is connected in parallel with a resistor, and the resistor is switched on or off based on the control of a binary data stream, as illustrated in FIG. 5. The on and off of the resistor will lead a circuit voltage to change, thereby implementing an amplitude shift keying (ASK) modulation, that is, modulation and transmission of the signal is implemented by adjusting an amplitude of a backscatter signal of the zero power consumption terminal. Similarly, for the capacitive load modulation, a resonant frequency of a circuit may be changed by switching a capacitor on and off, thereby implementing a frequency shift keying (FSK) modulation, that is, modulation and transmission of the signal is implemented by an operating frequency of a backscatter signal of the zero power consumption terminal.

It can be seen that the zero power consumption terminal performs information modulation on an incoming signal by means of load modulation, thereby implementing a backscatter communication process. Therefore, the zero power consumption terminal has significant advantages as that:
(1) the terminal does not actively transmit signals, so there is no need for complex RF links, such as a power amplifier (PA) and an RF filter;
(2) the terminal does not need to actively generate high frequency signals, so there is no need for a high frequency crystal oscillator; and
(3) terminal signal transmission does not need to consume power of the terminal with the aid of backscatter communication.

### 3. Encoding technology

Data transmitted by a zero power consumption terminal may use different forms of codes to represent binary "1" and "0". A radio frequency identification system usually uses one of the following encoding methods: non-return-to-zero-inverted (NRZI) encoding, Manchester encoding, unipolar return-to-zero encoding, differential bi-phase (DBP) encoding, differential encoding, pulse interval encoding (PIE), bi-phase space encoding (FM0), Miller encoding, differential dynamic encoding, or the like. Generally speaking, different encoding technologies use different pulse signals to represent 0 and 1.

The zero power consumption communication, owing to significant advantages such as ultra-low cost, zero power consumption and small size, may be widely applied in various industries such as logistics, smart warehousing, smart agriculture, power and electricity, and industrial Internet of Things for vertical industries; and it may also be applied in personal applications such as smart wearables and smart homes.

In some scenarios, based on the power sources and usage manner of zero power consumption terminals, the zero power consumption terminals may be classified into the following types.

### 1. Passive zero power consumption terminal

The zero power consumption terminal (e.g., an electronic tag in an RFID system) does not need a built-in battery. When the zero power consumption terminal approaches a network device (e.g., a reader/writer of the RFID system), the zero power consumption terminal is within a near-field formed by antenna radiation of the network device. Therefore, an antenna of the zero power consumption terminal generates an induced current through electromagnetic induction, and the induced current drives a low power consumption chip circuit of the zero power consumption terminal, so as to implement demodulation of a signal on a forward link, modulation of a signal on a backward link (or referred to as a backscatter link) and other operations. For a backscatter link, the zero power consumption terminal transmits a signal by means of backscattering.

It can be seen that the passive zero power consumption terminal does not need a built-in battery to drive either the forward link or the backward link, so that the passive zero power consumption terminal is a true zero power consumption terminal.

The passive zero power consumption terminal does not need a battery, and a radio frequency circuit and a baseband circuit therein are very simple, for example, a low-noise amplifier (LNA), a power amplifier (PA), a crystal oscillator, an analog-to-digital converter (ADC) and other devices are not needed. Therefore, the passive zero power consumption terminal has many advantages such as small size, light weight, very low price, and long service life.

### 2. Semi-passive zero power consumption terminal

The semi-passive zero power consumption terminal itself is not equipped with a conventional battery, but may harvest radio wave power by using an RF power harvesting module and store harvested power in a power storage unit (e.g., a capacitor). After acquiring the power, the power storage unit may drive a low power consumption chip circuit of the zero power consumption terminal to implement demodulation of a signal on a forward link, modulation of a signal on a backward link and other operations. For a backscatter link, the zero power consumption terminal transmits a signal by means of backscattering.

It can be seen that the semi-passive zero power consumption terminal does not need a built-in battery to drive either the forward link or the backward link. Although the power stored in the capacitor is used in operation, the power comes from the radio power harvested by the power harvesting module. Therefore, the semi-passive zero power consumption terminal is also a true zero power consumption terminal.

The semi-passive zero power consumption terminal retains many advantages of the passive zero power consumption terminal, that is, the semi-passive zero power consumption terminal has many advantages such as small size, light weight, very low price, and long service life.

### 3. Active zero power consumption terminal

A zero power consumption terminal used in some scenarios may be an active zero power consumption terminal, which may have a built-in battery. The battery is used to drive a low power consumption chip circuit of the zero power consumption terminal to implement demodulation of a signal on a forward link, modulation of a signal on a backward link and other operations. However, for a backscatter link, the zero power consumption terminal transmits a signal by means of backscattering. Therefore, zero power consumption of such a device is mainly reflected in the fact that the signal transmission on the backward link does not need power of the terminal itself, but uses a manner of backscattering.

The active zero power consumption terminal with the built-in battery supplies power to an RFID chip, to increase a reading/writing distance of the active zero power consumption terminal and to improve reliability of the communication. Therefore, the active zero power consumption terminal may be applied in some scenarios with relatively high requirements on the communication distance, reading latency and other factors.

In some scenarios, zero power consumption devices may be classified into the following types based on types of transmitters.

### 1) Zero power consumption device based on backscattering

The zero power consumption device of this type transmits uplink data by using the above backscattering manner. The zero power consumption device of this type is not equipped with an active transmitter for active transmission, but only equipped with a transmitter for backscattering. Therefore, in a case where the zero power consumption device of this type transmits data, the network device is required to provide a carrier, and the zero power consumption device of this type performs backscattering based on the carrier to implement data transmission.

### 2) Zero power consumption device based on an active transmitter

The zero power consumption device of this type transmits uplink data by using an active transmitter with active transmission capability. Therefore, in a case where data is to be transmitted, the zero power consumption device of this type may transmit the data by using its own active transmitter without requiring a network device to provide a carrier. The active transmitter suitable for the zero power consumption device may be, for example, ultra-low power ASK, ultra-low power FSK transmitter, or the like. In a case where a signal of 100 µW is transmitted, the overall power consumption may be reduced to 400 µW to 600 µW.

### 3) Zero power consumption device with both a backscatter transmitter and an active transmitter

The zero power consumption device of this type may support both a backscatter transmitter and an active transmitter. The zero power consumption device of this type may determine which signal transmission manner to be used depending on different situations (e.g., power conditions, available ambient power, etc.) or based on scheduling of a network device, that is, whether to use the active transmitter or the backscatter transmitter to transmit a signal.

With the booming development of the Internet of Things, existing Internet of Things communication technologies may no longer meet the Internet of Things communication requirements in many scenarios, as described below.

### 1. Harsh communication environment

Certain Internet of Things scenarios may face extreme environments, such as high temperature, extremely low temperature, high humidity, high pressure, high radiation, or high-speed movement, for example, ultra-high voltage substations, high-speed train track monitoring, environmental monitoring in high-cold areas, industrial production lines, etc. In these scenarios, existing Internet of Things terminals are unable to work due to limitations of the working environment of conventional power supplies. In addition, extreme working environments are also detrimental to Internet of Things maintenance, such as battery replacement.

### 2. Terminal form requirements with extremely small size

Certain Internet of Things communication scenarios, such as food traceability, commodity circulation, and smart wearables, require terminals to be extremely small in size, to facilitate use in these scenarios. For example, Internet of Things terminals used for commodity management in the circulation process usually take a form of electronic tags, which are embedded in the commodity packaging in a very small form. As another example, lightweight wearable devices may meet user needs while improving user experience.

### 3. Internet of Things communication requirements with extremely low-cost

Cost of Internet of Things terminals is required to be low enough in numerous Internet of Things communication scenarios, to enhance their competitiveness relative to other alternative technologies. For example, in logistics or warehousing scenarios, in order to facilitate management of a large number of circulating items, each item may be attached to an Internet of Things terminal, so that accurate management of the entire logistics process and cycle may be completed via communication between the terminal and a logistics network. Prices of Internet of Things terminals are required to be sufficiently competitive in these scenarios.

Therefore, in order to fulfill these unmet Internet of Things communication requirements, it is also necessary to develop Internet of Things with ultra-low-cost, extremely small size, battery-free/maintenance-free for cellular networks, and zero power consumption Internet of Things may exactly meet the requirements.

The zero power consumption Internet of Things (IoT) may also be called ambient power-enabled IoT (Ambient IoT or AMP IoT for short). The zero power consumption device may also be called an ambient IoT device or an AMP IoT device. The ambient IoT device may refer to an IoT device capable of using various ambient power, such as wireless radio frequency power, light power, solar power, thermal power, mechanical power, and other ambient power. The device of this type may not have power storage capability or may have very limited power storage capability, such as using a capacitor with a capacity of tens of µF.

The ambient IoT may be used in at least the following four types of scenarios:
1. object recognition, such as management of logistics and production line product, and supply chain management;
2. environmental monitoring, such as monitoring of temperature, humidity and harmful gas in working environments and natural environments;
3. positioning, such as indoor positioning, intelligent object search, and production line item positioning; and
4. intelligent control, such as intelligent control of various electrical appliances in smart homes (turning air conditioners on and off, adjusting temperature), and intelligent control of various facilities in agricultural greenhouses (automatic irrigation and fertilization).

The ambient IoT device needs to access a system such as a cellular communication system or a WIFI system, before performing communication. The ambient IoT device needs to access a cell or a basic service set (BSS) that supports ambient IoT devices before communicating with the network device. The ambient IoT device cannot work in a traditional cell or BSS that does not support ambient IoT. In addition, given that network devices have different capabilities, ambient IoT devices that the network devices are capable of supporting may be also of different types. In light of this, how to control the access of the ambient IoT devices is an urgent problem to be solved.

To facilitate understanding of the technical solutions of the embodiments of the present application, the technical solutions of the present application will be described in detail below through specific embodiments. The above related technologies, as optional solutions, may be arbitrarily combined with the technical solutions in the embodiments of the present application, and those combined solutions all fall within the protection scope of the embodiments of the present application. The embodiments of the present application include at least part of the following contents.

FIG. 6 is a schematic interaction diagram of a wireless communication method 200 in accordance with the embodiments of the present application. As illustrated in FIG. 6, the method 200 includes at least part of the following contents.

In S201, a network device transmits first indication information, where the first indication information is used for indicating access control information of a network, for example, access control information of a target cell or a target basic service set (BSS); and
correspondingly, an ambient power-enabled Internet of Things device receives the first indication information.

In S202, the ambient power-enabled Internet of Things device accesses the network according to the first indication information, for example, the ambient power-enabled Internet of Things device accesses the target cell or the target BSS.

In the embodiments of the present application, the ambient power-enabled Internet of Things device (AMP IoT device or Ambient IoT device) may refer to a device that needs power for operation from an external environment, or may be referred to as a zero power consumption device or a zero power consumption terminal.

It will be noted that the naming of the ambient power-enabled Internet of Things device in the present application does not limit the source of the power thereof. For example, the power required for work may come from wireless radio frequency power, light power, solar power, thermal power, mechanical power, or the like.

In some embodiments, the network device may be a base station in the cellular communication system. For example, the network device may be a gNB in the NR system; alternatively, the network device may be an AP in the WIFI system; alternatively, the network device may be a relay node; alternatively, the network device may be a terminal device in the communication system, such as a UE in the NR system or in the LTE system, a NB-IoT terminal or a reduced-capability (RedCap) terminal, which are not limited in the present application.

For example, the network device is a base station, and the first indication information may be used for indicating the access control information of the target cell.

As another example, the network device is an AP, and the first indication information may be used for indicating the access control information of the target BSS.

In some embodiments, ambient power-enabled Internet of Things devices may be classified into multiple types according to capabilities of the ambient power-enabled Internet of Things devices.

In some embodiments, the capability of an ambient power-enabled Internet of Things device includes, but is not limited to, at least one of the following:
a type of a transmitter of the ambient power-enabled Internet of Things device, whether the ambient power-enabled Internet of Things device supports backscattering, whether the ambient power-enabled Internet of Things device supports active transmission, whether the ambient power-enabled Internet of Things device supports inverting amplification, inverting amplification capability of the ambient power-enabled Internet of Things device, whether the ambient power-enabled Internet of Things device has power storage capability, a level of power storage capability of the ambient power-enabled Internet of Things device, a type of power used by the ambient power-enabled Internet of Things device for power harvesting, or a type of a network providing a service for the ambient power-enabled Internet of Things device.

In some embodiments, the type of the transmitter of the ambient power-enabled Internet of Things device may include a backscatter transmitter and/or an active transmitter.

In some embodiments, whether the ambient power-enabled Internet of Things device supports inverting amplification may refer to whether the ambient power-enabled Internet of Things device supports amplifying a backscatter signal while backscattering.

In some embodiments, the type of the power used by the ambient power-enabled Internet of Things device for power harvesting may include, but is not limited to, at least one of the following: radio frequency power, light power, solar power, thermal power, or mechanical power.

In some embodiments, the type of the network providing a service for the ambient power-enabled Internet of Things device may include a public network and a private network.

Optionally, the public network is referred to as a public ambient IoT network. The public network may be deployed by an operator and may provide services for all subscribed users.

Optionally, the private network is referred to as a private ambient IoT network. The private network may be built for industry users and only provide services for specific industry users.

Manner 1: ambient power-enabled Internet of Things devices are classified according to types of transmitters, data transmission types, or signal transmission manners.

As an example, the ambient power-enabled Internet of Things devices may be classified into:
an ambient power-enabled Internet of Things device supporting backscattering (or an ambient power-enabled Internet of Things device based on backscattering), and an ambient power-enabled Internet of Things device supporting active transmission (or an ambient power-enabled Internet of Things device based on active transmission).

As another example, the ambient power-enabled Internet of Things devices may be classified into:
an ambient power-enabled Internet of Things device supporting backscattering (or an ambient power-enabled Internet of Things device based on backscattering), an ambient power-enabled Internet of Things device supporting active transmission (or an ambient power-enabled Internet of Things device based on active transmission), and an ambient power-enabled Internet of Things device supporting backscattering and active transmission (or an ambient power-enabled Internet of Things device based on active transmission and backscattering).

In some embodiments, an ambient power-enabled Internet of Things device supporting backscattering is equipped with a backscatter transmitter, an ambient power-enabled Internet of Things device supporting active transmission is equipped with an active transmitter, and an ambient power-enabled Internet of Things device supporting backscattering and active transmission is equipped with a backscatter transmitter and an active transmitter, where the backscatter transmitter supports a communication manner of backscattering, and the active transmitter supports a communication manner of active transmission.

Optionally, the ambient power-enabled Internet of Things devices with backscatter capability may be further subclassified into:
an ambient power-enabled Internet of Things device with inverting amplification capability and supporting backscattering, and an ambient power-enabled Internet of Things device without inverting amplification capability and supporting backscattering.

As yet another example, the ambient power-enabled Internet of Things devices may include at least two of the following:
an ambient power-enabled Internet of Things device with inverting amplification capability and supporting backscattering, an ambient power-enabled Internet of Things device without inverting amplification capability and supporting backscattering, or an ambient power-enabled Internet of Things device supporting active transmission.

As still yet another example, the ambient power-enabled Internet of Things devices may include at least two of the following:
an ambient power-enabled Internet of Things device with inverting amplification capability and supporting backscattering, an ambient power-enabled Internet of Things device without inverting amplification capability and supporting backscattering, an ambient power-enabled Internet of Things device supporting active transmission, an ambient power-enabled Internet of Things device with inverting amplification capability and supporting backscattering and active transmission, or an ambient power-enabled Internet of Things device without inverting amplification capability and supporting backscattering and active transmission.

Manner 2: ambient power-enabled Internet of Things devices are classified according to power storage capabilities of the ambient power-enabled Internet of Things devices.

As an example, the ambient power-enabled Internet of Things devices may be classified into:
an ambient power-enabled Internet of Things device without power storage capability, and an ambient power-enabled Internet of Things device with power storage capability.

Optionally, the ambient power-enabled Internet of Things devices with power storage capabilities may further be classified into multiple levels, for example, classifying according to sizes of power storage of power storage units (e.g., capacitors) of the ambient power-enabled Internet of Things devices.

For example, there are an ambient power-enabled Internet of Things device with a first power storage capability and an ambient power-enabled Internet of Things device with a second power storage capability, where the first power storage capability is different from the second power storage capability. For example, the first power storage capability and the second power storage capability correspond to different capacitor capacities or correspond to different capacitor capacity ranges, such as the first power storage capability corresponds to a small capacitor capacity, and the second power storage capability corresponds to a large capacitor capacity.

As another example, there are an ambient power-enabled Internet of Things device with a first power storage capability, an ambient power-enabled Internet of Things device with a second power storage capability, and an ambient power-enabled Internet of Things device with a third power storage capability, where the first power storage capability, the second power storage capability and the third power storage capability are different from each other. For example, the first power storage capability, the second power storage capability and the third power storage capability correspond to different capacitor capacities or correspond to different capacitor capacity ranges, such as the first power storage capability corresponds to a small capacitor capacity, the second power storage capability corresponds to a medium capacitor capacity, and the third power storage capability corresponds to a large capacitor capacity.

Manner 3: ambient power-enabled Internet of Things devices are classified according to power sources of the ambient power-enabled Internet of Things devices.

As an example, the ambient power-enabled Internet of Things devices may be classified into:
an ambient power-enabled Internet of Things device based on radio frequency power, and an ambient power-enabled Internet of Things device based on non-radio frequency power (i.e., using other ambient power besides radio frequency power, such as one or more of light, heat, vibration, or the like).

As another example, the ambient power-enabled Internet of Things devices may be classified into:
an ambient power-enabled Internet of Things device based on radio frequency power, an ambient power-enabled Internet of Things device based on light power, an ambient power-enabled Internet of Things device based on mechanical power, and an ambient power-enabled Internet of Things device based on other ambient power.

Manner 4: ambient power-enabled Internet of Things devices are classified according to types of networks providing services for the ambient power-enabled Internet of Things devices.

For example, the ambient power-enabled Internet of Things devices are classified into an ambient power-enabled Internet of Things device based on a public network and an ambient power-enabled Internet of Things device based on a private network.

In some embodiments of the present application, the network device may perform unified access control on all ambient power-enabled Internet of Things devices, or may perform access control on an ambient power-enabled Internet of Things device based on a type of the ambient power-enabled Internet of Things device (or capability of the ambient power-enabled Internet of Things device). For example, the network device performs access control on an ambient power-enabled Internet of Things device based on the capability of the network device, and characteristics of the cell or BSS. The specific access control manner will be described below in conjunction with specific embodiments.

Optionally, the characteristics of the cell or BSS may include, but are not limited to, coverage radius of the cell or BSS, or the like.

Optionally, the capability of the network device may include, but is not limited to, communication distance of the network device, whether the network device supports providing radio frequency power for an ambient power-enabled Internet of Things device, whether the network device supports providing a carrier used for backscattering for an ambient power-enabled Internet of Things device, or the like.

For example, in a case where the network device does not support providing radio frequency power for an ambient power-enabled Internet of Things device, the network device may prohibit the ambient power-enabled Internet of Things device based on radio frequency power from accessing the cell or BSS.

As another example, in a case where the network device does not support providing a carrier used for backscattering for an ambient power-enabled Internet of Things device, the network device may prohibit the ambient power-enabled Internet of Things device based on backscattering from accessing the cell or BSS.

Embodiment 1: the network device may perform unified access control on ambient power-enabled Internet of Things devices.

An ambient power-enabled Internet of Things device is significantly different from a traditional enhanced mobile ultra-wideband (Enhance Mobile Broadband, eMBB) terminal (e.g., a terminal device in the NR system or the LTE system) or other existing Internet of Things device terminals (e.g., reduced-capability (RedCap) terminals, and narrow band Internet of Things (NB-IoT) terminals or machine type communication (MTC)), for example, in terms of capability of a device, a working condition (e.g., the ambient power-enabled Internet of Things device may need to acquire power from the environment and/or perform backscattering by using a carrier), network coverage, and the like. Therefore, a cell or BSS may have capability to support access of the ambient power-enabled Internet of Things device, or may not have the capability to support the access of the ambient power-enabled Internet of Things device, or even if the access of the ambient power-enabled Internet of Things device is supported, the ambient power-enabled Internet of Things device is not be desired to access the cell or BSS during a specific period. Therefore, whether the ambient power-enabled Internet of Things device is allowed to access or prohibited from accessing the network may be effectively controlled via Embodiment 1.

In some embodiments, the first indication information is used for indicating whether the ambient power-enabled Internet of Things device is prohibited from accessing the target cell or the target BSS, or in other words, whether the ambient power-enabled Internet of Things device is allowed to access the target cell or the target BSS, or in other words, allowing or prohibiting the ambient power-enabled Internet of Things device from accessing the target cell or the target BSS.

In some embodiments, different status values of the first indication information are used for indicating whether the ambient power-enabled Internet of Things device is prohibited from accessing the target cell or the target BSS.

In some specific embodiments, the first indication information may be 1 bit, and different values of the 1 bit are used for indicating whether the ambient power-enabled Internet of Things device is prohibited from accessing the target cell or the target BSS.

For example, a value of 1 for the 1 bit indicates that the ambient power-enabled Internet of Things device is allowed to access the target cell or the target BSS, and a value of 0 for the 1 indicates that the ambient power-enabled Internet of Things device is prohibited from accessing the target cell or the target BSS.

As another example, a value of 0 for the 1 bit indicates that the ambient power-enabled Internet of Things device is allowed to access the target cell or target BSS, and a value of 1 for the 1 bit indicates that the ambient power-enabled Internet of Things device is prohibited from accessing the target cell or the target BSS.

In some embodiments, the first indication information is transmitted via a broadcast channel (i.e., the first indication information may be carried in the broadcast channel), or in other words, the first indication information is transmitted via broadcasting.

For example, the first indication information is transmitted via a master information block (MIB), or may also be transmitted via other broadcast channels except the MIB.

As another example, the first indication information is transmitted via a beacon frame.

Embodiment 2: the network device may perform access control on an ambient power-enabled Internet of Things device of a specific type.

In some scenarios, only the network device with specific capability may support access of the ambient power-enabled Internet of Things device of the specific type. Therefore, the network device may perform the access control on the ambient power-enabled Internet of Things device of the specific type based on its own capability.

For example, to support an ambient power-enabled Internet of Things device based on backscattering, the network device needs to transmit a carrier signal to the ambient power-enabled Internet of Things device of this type in a case where the ambient power-enabled Internet of Things device of this type transmits data.

As another example, to support an ambient power-enabled Internet of Things device based on radio frequency power, the network device needs to transmit radio waves to the ambient power-enabled Internet of Things device of this type in a case where the ambient power-enabled Internet of Things device of this type is working, for the ambient power-enabled Internet of Things device of this type to harvest power.

That is, the target cell or the target BSS may have capability to support access of an ambient power-enabled Internet of Things device of a specific type, or may not have the capability to support the access of the ambient power-enabled Internet of Things device of the specific type, or even if the access of the ambient power-enabled Internet of Things device of the specific type is supported, the ambient power-enabled Internet of Things device of the specific type is not be desired to access the cell or BSS during a specific period. Therefore, whether the ambient power-enabled Internet of Things device of the specific type is allowed to access or prohibited from accessing the network may be effectively controlled via Embodiment 2.

In some embodiments, an ambient power-enabled Internet of Things device of a target type includes one or more of the ambient power-enabled Internet of Things devices described of multiple types above.

In some embodiments, the ambient power-enabled Internet of Things device of the target type may include at least two of the following:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things devices without power storage capability, an ambient power-enabled Internet of Things devices with power storage capability, an ambient power-enabled Internet of Things device based on a public network, or an ambient power-enabled Internet of Things device based on a private network.

In a specific embodiment, the ambient power-enabled Internet of Things device of the target type may include an ambient power-enabled Internet of Things device supporting backscattering, and/or an ambient power-enabled Internet of Things device without power storage capability, such as an ambient power-enabled Internet of Things device based on radio frequency power.

In some embodiments, the first indication information is used for indicating whether the ambient power-enabled Internet of Things device of the target type is prohibited from accessing the target cell or the target BSS, or in other words, whether the ambient power-enabled Internet of Things device of the target type is allowed to access the target cell or the target BSS, or in other words, allowing or prohibiting the ambient power-enabled Internet of Things device of the target type from accessing the target cell or the target BSS.

In some embodiments, different status values of the first indication information are used for indicating whether the ambient power-enabled Internet of Things device of the target type is prohibited from accessing the target cell or the target BSS.

In some specific embodiments, the first indication information may be 1 bit, and different values of the 1 bit are used for indicating whether the ambient power-enabled Internet of Things device of the target type is prohibited from accessing the target cell or the target BSS.

For example, a value of 1 for the 1 bit indicates that the ambient power-enabled Internet of Things device of the target type is allowed to access the target cell or the target BSS, and a value of 0 for the 1 bit indicates that the ambient power-enabled Internet of Things device of the target type is prohibited from accessing the target cell or the target BSS.

As another example, a value of 0 for the 1 bit indicates that the ambient power-enabled Internet of Things device of the target type is allowed to access the target cell or the target BSS, and a value of 1 for the 1 bit indicates that the ambient power-enabled Internet of Things device of the target type is prohibited from accessing the target cell or the target BSS.

In some embodiments, the first indication information is transmitted via a broadcast channel (i.e., the first indication information may be carried in the broadcast channel), or in other words, the first indication information is transmitted via broadcasting.

For example, the first indication information is transmitted via an MIB, or may be transmitted via other broadcast channels except the MIB.

As another example, the first indication information is transmitted via a beacon frame.

In some embodiments, ambient power-enabled Internet of Things devices of other types other than the target type access the target cell or the target BSS according to a first access control manner by default. For example, the first access control manner may be that access is allowed, or may be that the access is prohibited.

That is, the ambient power-enabled Internet of Things devices of other types other than the target type are allowed to access the target cell or the target BSS by default, or the ambient power-enabled Internet of Things devices of other types other than the target type are prohibited from accessing the target cell or the target BSS by default.

In some other embodiments, all ambient power-enabled Internet of Things devices access the target cell or the target BSS according to a second access control manner by default, and the access of the ambient power-enabled Internet of Things device of the target type is controlled by the first indication information. For example, the second access control manner may be that access is allowed, or may be that the access is prohibited.

That is, an ambient power-enabled Internet of Things device is allowed to access the target cell or the target BSS by default, or the ambient power-enabled Internet of Things device is prohibited from accessing the target cell or the target BSS by default, and further, the first indication information is used for indicating whether the ambient power-enabled Internet of Things device of the target type is allowed or prohibited from accessing the target cell or the target BSS. Therefore, the access control on the ambient power-enabled Internet of Things device of the specific type may be implemented via Embodiment 2, to ensure communication requirements of the ambient power-enabled Internet of Things device of the specific type.

Embodiment 3: the network device may perform access control on ambient power-enabled Internet of Things devices of multiple types.

That is, the first indication information is used for indicating access control information of the ambient power-enabled Internet of Things devices of the multiple types.

Therefore, in Embodiment 3, the network device may perform refined access control on the ambient power-enabled Internet of Things devices of the multiple types, so that an appropriate access control manner for ambient power-enabled Internet of Things devices of different types may be set, that is, the ambient power-enabled Internet of Things devices of different types may access an appropriate cell or BSS, to ensure normal communication of the ambient power-enabled Internet of Things devices and improve flexible deployment capability of the network.

It should be understood that the specific indication manner of the access control information of the ambient power-enabled Internet of Things devices of the multiple types is not limited in the present application. For example, a bit encoding manner may be used, with each encoding combination indicating a type combination of allowed access and/or a type combination of prohibited access. The indication manner of the access control information of the ambient power-enabled Internet of Things devices of the multiple types will be described below in conjunction with specific embodiments.

Embodiment 3-1: the first indication information indicates the access control information of the ambient power-enabled Internet of Things devices of the multiple types via bit mapping.

For example, the first indication information includes multiple bits, each bit corresponds to an ambient power-enabled Internet of Things device of one type, and a value of each bit is used for indicating whether the ambient power-enabled Internet of Things device of the corresponding type is prohibited from accessing the target cell or the target BSS.

As an example, the ambient power-enabled Internet of Things devices of the multiple types include an ambient power-enabled Internet of Things device supporting backscattering and an ambient power-enabled Internet of Things device supporting active transmission. In this case, the first indication information may be 2 bits (recorded as bit 1 and bit 2), corresponding to the ambient power-enabled Internet of Things device supporting backscattering and the ambient power-enabled Internet of Things device supporting active transmission, respectively. A value of each bit is used for indicating whether an ambient power-enabled Internet of Things device of a corresponding type is prohibited from accessing the target cell or the target BSS. For example, a value of 1 indicates that access is allowed, and a value of 0 indicates that the access is prohibited. As another example, a value of 0 indicates that access is allowed, and a value of 1 indicates that the access is prohibited.

In a specific embodiment, a corresponding relation between a state value of the first indication information and the access control information of the ambient power-enabled Internet of Things device may be as shown in Table 1.

**Table 1**

| | Bit 1 | Bit 2 | Ambient power-enabled Internet of Things device supporting backscattering | Ambient power-enabled Internet of Things device supporting active transmission |
|---|---|---|---|---|
| Case 1 | 0 | 0 | Access is prohibited | Access is prohibited |
| Case 2 | 0 | 1 | Access is prohibited | Access is allowed |
| Case 3 | 1 | 0 | Access is allowed | Access is prohibited |
| Case 4 | 1 | 1 | Access is allowed | Access is allowed |

Embodiment 3-2: different status values of the first indication information are used for indicating that ambient power-enabled Internet of Things devices of different types in the multiple types are allowed to access the target cell or the target BSS, and/or that ambient power-enabled Internet of Things devices of different types in the multiple types are prohibited from accessing the target cell or the target BSS.

As an example, the ambient power-enabled Internet of Things devices of the multiple types include an ambient power-enabled Internet of Things device supporting backscattering and an ambient power-enabled Internet of Things device supporting active transmission. In this case, the first indication information may be 2 bits (recorded as bit 1 and bit 2), and different values of the 2 bits are used for indicating whether ambient power-enabled Internet of Things devices of different types are allowed or prohibited from accessing the target cell or the target BSS.

In a specific embodiment, a corresponding relation between a state value of the first indication information and the access control information of the ambient power-enabled Internet of Things device may be as shown in Table 2, or may also be as shown in Table 1.

**Table 2**

| | Bit 1 | Bit 2 | Ambient power-enabled Internet of Things device supporting backscattering | Ambient power-enabled Internet of Things device supporting active transmission |
|---|---|---|---|---|
| Case 1 | 0 | 0 | Access is prohibited | Access is prohibited |
| Case 2 | 0 | 1 | Access is allowed | Access is prohibited |
| Case 3 | 1 | 0 | Access is prohibited | Access is allowed |
| Case 4 | 1 | 1 | Access is allowed | Access is allowed |

In some embodiments, the ambient power-enabled Internet of Things devices of the multiple types include at least two of the ambient power-enabled Internet of Things devices of the multiple types described above.

In some embodiments, the network device may perform access control on an ambient power-enabled Internet of Things device based on a type of a transmitter, which is beneficial for connecting ambient power-enabled Internet of Things devices with different types of transmitters to an appropriate cell or BSS, to ensure normal communication of the ambient power-enabled Internet of Things devices.

In this case, as an example, the ambient power-enabled Internet of Things devices of the multiple types may include an ambient power-enabled Internet of Things device supporting backscattering and an ambient power-enabled Internet of Things device supporting active transmission. As another example, the ambient power-enabled Internet of Things devices of the multiple types may include an ambient power-enabled Internet of Things device supporting backscattering, an ambient power-enabled Internet of Things device supporting active transmission, and an ambient power-enabled Internet of Things device supporting backscattering and active transmission.

For example, the ambient power-enabled Internet of Things device supporting active transmission may support a relatively long transmission distance and implement a relatively large coverage, which may access a cell or BSS with a relatively large coverage area.

As another example, the ambient power-enabled Internet of Things device supporting backscattering has a relatively small transmission distance and a relatively small coverage, which may access a cell or BSS with a relatively small coverage area.

In some other embodiments, the network device may perform access control on an ambient power-enabled Internet of Things device according to whether the ambient power-enabled Internet of Things device has inverting amplification capability or according to a level of the inverting amplification capability, enabling ambient power-enabled Internet of Things devices with different inverting amplification capabilities to access an appropriate cell or BSS, to ensure normal communication of the ambient power-enabled Internet of Things devices.

For example, the ambient power-enabled Internet of Things device with the inverting amplification capability may support a relatively long transmission distance and implement a relatively large coverage, which may access a cell or BSS with a relatively large coverage area.

As another example, the ambient power-enabled Internet of Things device without the inverting amplification capability has a relatively small transmission distance and a relatively small coverage, which may access a cell or BSS with a relatively small coverage area.

In some other embodiments, the network device may perform access control on an ambient power-enabled Internet of Things device according to power storage capability of the ambient power-enabled Internet of Things device, enabling ambient power-enabled Internet of Things devices with different power storage capabilities to access an appropriate cell or BSS, to ensure normal communication of the ambient power-enabled Internet of Things devices.

In this case, as an example, the ambient power-enabled Internet of Things devices of the multiple types may include an ambient power-enabled Internet of Things device without power storage capability and an ambient power-enabled Internet of Things device with power storage capability, or include an ambient power-enabled Internet of Things device without power storage capability and an ambient power-enabled Internet of Things device with multiple levels of power storage capability.

The ambient power-enabled Internet of Things device without power storage capability usually requires the network device to provide radio frequency power, where communication time should be shortened as much as possible, and a communication process should be simplified as much as possible. Whereas the ambient power-enabled Internet of Things device with power storage capability may generate signals with a relatively high power by using stored power, so as to support a relatively long communication distance and implement a relatively large coverage, which may access a cell or BSS with a relatively large coverage area.

In some other embodiments, the network device may perform access control on an ambient power-enabled Internet of Things device according to a power source of the ambient power-enabled Internet of Things device, enabling ambient power-enabled Internet of Things devices with different power sources to access an appropriate cell or BSS, to ensure normal communication of the ambient power-enabled Internet of Things devices.

In this case, as an example, the ambient power-enabled Internet of Things devices of the multiple types may include an ambient power-enabled Internet of Things device based on radio frequency power and an ambient power-enabled Internet of Things device based on non-radio frequency power.

To support the ambient power-enabled Internet of Things device based on radio frequency power, the network device needs to transmit a radio signal to the ambient power-enabled Internet of Things device of this type in a case where the ambient power-enabled Internet of Things device of this type is working, for the ambient power-enabled Internet of Things device of this type to harvest power. Whereas the ambient power-enabled Internet of Things device based on non-radio frequency power does not need the network device to provide it with radio frequency power. Therefore, the network device may control whether access of the ambient power-enabled Internet of Things device based on radio power is allowed according to whether the network device itself supports providing the radio frequency power to the ambient power-enabled Internet of Things device based on the radio frequency power.

In some further embodiments, the network device may perform access control on an ambient Internet of Things device according to a service network type of the ambient Internet of Things device, enabling ambient Internet of Things devices having different service network types to access an appropriate cell or BSS, so as to prevent a private network user from accessing a public network or a public network user from accessing a private network, ensuring interests of network operators.

In this case, as an example, the ambient Internet of Things devices of the multiple types may include an ambient Internet of Things device based on a public network and an ambient Internet of Things device based on a private network.

In some embodiments of the present application, the method 200 further includes:
reporting, by the ambient power-enabled Internet of Things device, capability information of the ambient power-enabled Internet of Things device.

Correspondingly, the network device receives the capability information of the ambient power-enabled Internet of Things device reported by the ambient power-enabled Internet of Things device.

In some embodiments, the capability information of the ambient power-enabled Internet of Things device includes at least one of the following:
a type of a transmitter of the ambient power-enabled Internet of Things device, whether the ambient power-enabled Internet of Things device supports backscattering, whether the ambient power-enabled Internet of Things device supports active transmission, whether the ambient power-enabled Internet of Things device supports inverting amplification, inverting amplification capability of the ambient power-enabled Internet of Things device, whether the ambient power-enabled Internet of Things device has power storage capability, a level of power storage capability of the ambient power-enabled Internet of Things device, a type of power used by the ambient power-enabled Internet of Things device for power harvesting, or a type of a network providing a service for the ambient power-enabled Internet of Things device.

In some embodiments, the network device may, according to the capability information of the ambient power-enabled Internet of Things device, determine an access control manner of the ambient power-enabled Internet of Things device, or select a communication manner or communication process with the ambient power-enabled Internet of Things device, or determine whether to provide power or whether to provide a carrier signal for the ambient power-enabled Internet of Things device, or the like.

As an example, in a case where the power source of the ambient power-enabled Internet of Things device is radio frequency power, the network device may determine that the network device needs to transmit a radio signal to the ambient power-enabled Internet of Things device in a case where the ambient power-enabled Internet of Things device is working, for the ambient power-enabled Internet of Things device to harvest power.

As an example, in a case where the ambient power-enabled Internet of Things device only supports backscattering, the network device may determine that the network device needs to transmit a carrier to the ambient power-enabled Internet of Things device in a case where the ambient power-enabled Internet of Things device transmits data, for the ambient power-enabled Internet of Things device to perform backscattering.

As an example, to support an ambient power-enabled Internet of Things device based on radio frequency power, the network device needs to provide the radio frequency power to the ambient power-enabled Internet of Things device of this type. In a case where capability of the network device does not support to provide the radio frequency power, the network device may select to prohibit the ambient power-enabled Internet of Things device of this type from accessing a cell or BSS. Alternatively, in a case where the capability of the network device supports to provide the radio frequency power, the network device may select to allow the ambient power-enabled Internet of Things device of this type to access the cell or BSS.

As an example, to support an ambient power-enabled Internet of Things device based on backscattering, the network device needs to provide the ambient power-enabled Internet of Things device of this type with a carrier signal for backscattering. In a case where capability of the network device does not support to provide a carrier for backscattering, the network device may select to prohibit the ambient power-enabled Internet of Things device of this type from accessing a cell or BSS. Alternatively, in a case where the capability of the network device supports to provide the carrier for backscattering, the network device may select to allow the ambient power-enabled Internet of Things of this type to access the cell or BSS.

As an example, in a case where coverage radius of a cell or BSS is relatively large or communication distance of the network device is relatively large, the network device may prohibit the ambient power-enabled Internet of Things device based on backscattering from accessing the cell or BSS. Alternatively, in a case where coverage radius of a cell or BSS is relatively small or the communication distance of the network device is relatively small, the network device may allow the ambient power-enabled Internet of Things device based on backscattering to access the cell or BSS.

In summary, the access control manner provided in the embodiments of the present application enables the network device to set an appropriate access control manner for the ambient power-enabled Internet of Things devices of different types based on the capability of the network device, and characteristics of the cell or BSS, that is, the ambient power-enabled Internet of Things devices of different types are each connected to an appropriate cell or BSS, to ensure normal communication of the ambient power-enabled Internet of Things devices and improve the flexible deployment capability of the network.

FIG. 7 is a schematic interaction diagram of a wireless communication method 300 in accordance with the embodiments of the present application. As illustrated in FIG. 7, the method 300 includes at least part of the following contents:
S301, reporting, by an ambient power-enabled Internet of Things device, capability information of the ambient power-enabled Internet of Things device.

Correspondingly, a network device receives the capability information of the ambient power-enabled Internet of Things device reported by the ambient power-enabled Internet of Things device.

In some embodiments, the specific implementation of the ambient power-enabled Internet of Things device and the network device in the method 300 may be referred to the related implementation of the ambient power-enabled Internet of Things device and the network device in the method 200, which will not be repeated here for the sake of brevity.

In some embodiments, the capability information of the ambient power-enabled Internet of Things device includes at least one of the following:
a type of a transmitter of the ambient power-enabled Internet of Things device, whether the ambient power-enabled Internet of Things device supports backscattering, whether the ambient power-enabled Internet of Things device supports active transmission, whether the ambient power-enabled Internet of Things device supports inverting amplification, inverting amplification capability of the ambient power-enabled Internet of Things device, whether the ambient power-enabled Internet of Things device has power storage capability, a level of power storage capability of the ambient power-enabled Internet of Things device, a type of power used by the ambient power-enabled Internet of Things device for power harvesting, or a type of a network providing a service for the ambient power-enabled Internet of Things device.

In some embodiments, the type of the transmitter of the ambient power-enabled Internet of Things device may include a backscatter transmitter and/or an active transmitter.

In some embodiments, whether the ambient power-enabled Internet of Things device supports inverting amplification may refer to whether the ambient power-enabled Internet of Things device supports amplifying a backscatter signal while backscattering.

In some embodiments, the inverting amplification capability of the ambient power-enabled Internet of Things device may refer to a capability of the ambient power-enabled Internet of Things device to support amplifying the backscatter signal while backscattering, for example, supporting amplification of 5 dB, 10 dB, 15 dB, or the like.

In some embodiments, the type of the power used by the ambient power-enabled Internet of Things device for power harvesting may include, but is not limited to, at least one of the following:
radio frequency power, light power, solar power, thermal power, or mechanical power.

In some embodiments, the type of the network providing the service for the ambient power-enabled Internet of Things device may include a public network and a private network.

In some embodiments, the network device may, according to the capability information of the ambient power-enabled Internet of Things device, determine an access control manner of the ambient power-enabled Internet of Things device, select a communication manner or communication process with the ambient power-enabled Internet of Things device, determine whether to provide power or whether to provide a carrier signal for the ambient power-enabled Internet of Things device, or the like.

As an example, in a case where the power source of the ambient power-enabled Internet of Things device is radio frequency power, the network device may determine that the network device needs to transmit a radio signal to the ambient power-enabled Internet of Things device in a case where the ambient power-enabled Internet of Things device is working, for the ambient power-enabled Internet of Things device to harvest power.

As an example, in a case where the ambient power-enabled Internet of Things device only supports backscattering, the network device may determine that the network device needs to transmit a carrier to the ambient power-enabled Internet of Things device in a case where the ambient power-enabled Internet of Things device transmits data, for the ambient power-enabled Internet of Things device to perform backscattering.

As an example, to support an ambient power-enabled Internet of Things device based on radio frequency power, the network device needs to provide the radio frequency power to the ambient power-enabled Internet of Things device of this type. In a case where capability of the network device does not support to provide the radio frequency power, the network device may select to prohibit the ambient power-enabled Internet of Things device of this type from accessing a cell or BSS. Alternatively, in a case where the capability of the network device supports to provide the radio frequency power, the network device may select to allow the ambient power-enabled Internet of Things device of this type to access the cell or BSS.

As an example, to support an ambient power-enabled Internet of Things device based on backscattering, the network device needs to provide the ambient power-enabled Internet of Things device of this type with a carrier signal for backscattering. In a case where capability of the network device does not support to provide a carrier for backscattering, the network device may select to prohibit the ambient power-enabled Internet of Things device of this type from accessing a cell or BSS. Alternatively, in a case where the capability of the network device supports to provide the carrier for backscattering, the network device may select to allow the ambient power-enabled Internet of Things of this type to access the cell or BSS.

As an example, in a case where coverage radius of a cell or BSS is relatively large or communication distance of the network device is relatively large, the network device may prohibit the ambient power-enabled Internet of Things device based on backscattering from accessing the cell or BSS. Alternatively, in a case where coverage radius of a cell or BSS is relatively small or the communication distance of the network device is relatively small, the network device may allow the ambient power-enabled Internet of Things device based on backscattering to access the cell or BSS.

In summary, in the embodiments of the present application, the ambient power-enabled Internet of Things device may report the capability information to the network device, enabling the network device to set an appropriate access control manner for the ambient power-enabled Internet of Things device according to the capability information of the ambient power-enabled Internet of Things device, so that the network device may, based on the capability of the network device, and characteristics of the cell or BSS, set appropriate access control manners for ambient power-enabled Internet of Things devices of different types, select a communication manner or communication process with the ambient power-enabled Internet of Things device, determine whether to provide power or whether to provide a carrier signal for the ambient power-enabled Internet of Things device, or the like, so as to ensure normal communication of the ambient power-enabled Internet of Things devices.

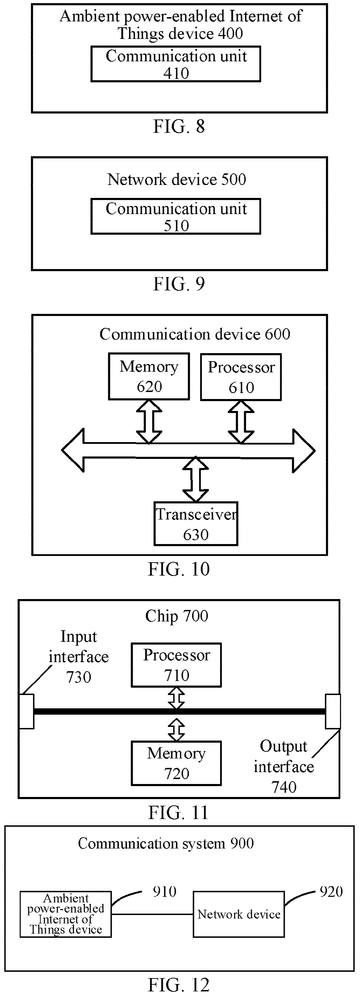

In conjunction with FIGS. 6 to 7, the method embodiments of the present application are described in detail above, and the device embodiments of the present application will be described in detail below in conjunction with FIGS. 8 to 12. It should be understood that the device embodiments and the method embodiments correspond to each other, and similar descriptions may refer to that of the method embodiments.

FIG. 8 illustrates a schematic block diagram of an ambient power-enabled Internet of Things device 400 in accordance with the embodiments of the present application. As illustrated in FIG. 8, the ambient power-enabled Internet of Things device 400 includes:
a communication unit 410, used to receive first indication information, where the first indication information is used for indicating access control information of a target cell or a target basic service set (BSS).

In some embodiments, the first indication information is used for indicating whether the ambient power-enabled Internet of Things device is prohibited from accessing the target cell or the target BSS.

In some embodiments, different status values of the first indication information are used for indicating whether the ambient power-enabled Internet of Things device is prohibited from accessing the target cell or the target BSS.

In some embodiments, the first indication information is used for indicating whether an ambient power-enabled Internet of Things device of a target type is prohibited from accessing the target cell or the target BSS.

In some embodiments, different status values of the first indication information are used for indicating whether the ambient power-enabled Internet of Things device of the target type is prohibited from accessing the target cell or the target BSS.

In some embodiments, the ambient power-enabled Internet of Things device of the target type includes one of the following:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

In some embodiments, the first indication information is 1 bit.

In some embodiments, the first indication information is used for indicating access control information ambient power-enabled Internet of Things devices of multiple types.

In some embodiments, the first indication information indicates the access control information of the ambient power-enabled Internet of Things devices of the multiple types via bit mapping.

In some embodiments, the first indication information includes multiple bits, each bit corresponds to an ambient power-enabled Internet of Things device of one type, and a value of each bit is used for indicating whether the ambient power-enabled Internet of Things device of the corresponding type is prohibited from accessing the target cell or the target BSS.

In some embodiments, different status values of the first indication information are used for indicating that ambient power-enabled Internet of Things devices of different types in the multiple types are allowed to access the target cell or the target BSS, and/or that ambient power-enabled Internet of Things devices of different types in the multiple types are prohibited from accessing the target cell or the target BSS.

In some embodiments, the ambient power-enabled Internet of Things devices of the multiple types include at least two of the following:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

In some embodiments, the first indication information is transmitted via a broadcast channel.

In some embodiments, the first indication information is transmitted via a master information block (MIB) or a beacon frame.

In some embodiments, the communication unit 410 is further used to:
report, by the ambient power-enabled Internet of Things device, capability information of the ambient power-enabled Internet of Things device.

In some embodiments, the capability information of the ambient power-enabled Internet of Things device includes at least one of the following:
whether the ambient power-enabled Internet of Things device supports backscattering, whether the ambient power-enabled Internet of Things device supports active transmission, whether the ambient power-enabled Internet of Things device has power storage capability, a level of power storage capability of the ambient power-enabled Internet of Things device, a type of power used by the ambient power-enabled Internet of Things device for power harvesting, or a type of a network providing a service for the ambient power-enabled Internet of Things device.

In some embodiments, the ambient power-enabled Internet of Things device 400 further includes:
a processing unit, used to access the target cell or the target BSS according to the first indication information.

Optionally, in some embodiments, the communication unit may be a communication interface or a transceiver, or may be an input/output interface of a communication chip or a system on chip. The processing unit mentioned above may be one or more processors.

It should be understood that the ambient power-enabled Internet of Things device 400 in accordance with the embodiments of the present application may correspond to the ambient power-enabled Internet of Things device in the method embodiments of the present application, and the above-mentioned operations and other operations and/or functions of each unit in the ambient power-enabled Internet of Things device 400 are respectively for implementing corresponding processes of the ambient power-enabled Internet of Things device in the method illustrated in FIGS. 6 to 7, which will not be repeated here for the sake of brevity.

FIG. 9 illustrates a schematic block diagram of a network device 500 in accordance with the embodiments of the present application. As illustrated in FIG. 9, the network device 500 includes:
a communication unit 510, used to transmit first indication information, where the first indication information is used for indicating control information enabling an ambient power-enabled Internet of Things device to access a target cell.

In some embodiments, the first indication information is used for indicating whether the ambient IoT device is prohibited from accessing the target cell or a target basic service set (BSS).

In some embodiments, different status values of the first indication information are used for indicating whether the ambient power-enabled Internet of Things device is prohibited from accessing the target cell or the target BSS.

In some embodiments, the first indication information is used for indicating whether an ambient power-enabled Internet of Things device of a target type is prohibited from accessing the target cell or the target BSS.

In some embodiments, different status values of the first indication information are used for indicating whether the ambient power-enabled Internet of Things device of the target type is prohibited from accessing the target cell or the target BSS.

In some embodiments, the ambient power-enabled Internet of Things device of the target type includes one of the following:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

In some embodiments, the first indication information is 1 bit.

In some embodiments, the first indication information is used for indicating access control information of ambient power-enabled Internet of Things devices of multiple types.

In some embodiments, the first indication information indicates the access control information of the ambient power-enabled Internet of Things devices of the multiple types via bit mapping.

In some embodiments, the first indication information includes multiple bits, each bit corresponds to an ambient power-enabled Internet of Things device of one type, and a value of each bit is used for indicating whether the ambient power-enabled Internet of Things device of the corresponding type is prohibited from accessing the target cell or the target BSS.

In some embodiments, different status values of the first indication information are used for indicating that ambient power-enabled Internet of Things devices of different types in the multiple types are allowed to access the target cell or the target BSS, and/or that ambient power-enabled Internet of Things devices of different types in the multiple types are prohibited from accessing the target cell or the target BSS.

In some embodiments, the ambient power-enabled Internet of Things devices of the multiple types include at least two of the following:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

In some embodiments, the first indication information is transmitted via a broadcast channel.

In some embodiments, the first indication information is transmitted via a master information block (MIB) or a beacon frame.

In some embodiments, the communication unit 510 is further configured to: receive capability information of the ambient power-enabled Internet of Things device reported by the ambient power-enabled Internet of Things device.

In some embodiments, the capability information of the ambient power-enabled Internet of Things device includes at least one of the following:
whether the ambient power-enabled Internet of Things device supports backscattering, whether the ambient power-enabled Internet of Things device supports active transmission, whether the ambient power-enabled Internet of Things device has power storage capability, a level of power storage capability of the ambient power-enabled Internet of Things device, a type of power used by the ambient power-enabled Internet of Things device for power harvesting, or a type of a network providing a service for the ambient power-enabled Internet of Things device.

Optionally, in some embodiments, the communication unit may be a communication interface or a transceiver, or may be an input/output interface of a communication chip or a system on chip.

It should be understood that the network device 500 in accordance with the embodiments of the present application may correspond to the network device in the embodiments of the method of the present application, and the above-mentioned operations and other operations and/or functions of each unit in the network device 500 are respectively for implementing corresponding processes of the network device in the method illustrated in FIGS. 6 to 7, which will not be repeated here for the sake of brevity.

FIG. 10 is a schematic structural diagram of a communication device 600 provided in the embodiments of the present application. The communication device 600 illustrated in FIG. 10 includes a processor 610. The processor 610 may call a computer program from a memory and run the computer program, to implement the methods in the embodiments of the present application.

Optionally, as illustrated in FIG. 10, the communication device 600 may further include a memory 620. The processor 610 may call a computer program from the memory 620 and run the computer program, to implement the methods in the embodiments of the present application.

Here, the memory 620 may be a separate device independent of the processor 610, or may be integrated into the processor 610.

Optionally, as illustrated in FIG. 10, the communication device 600 may further include a transceiver 630, and the processor 610 may control the transceiver 630 to communicate with other devices, and specifically, may control the transceiver 630 to transmit information or data to other devices, or control the transceiver 630 to receive information or data transmitted by other devices.

Here, the transceiver 630 may include a transmitter and a receiver. The transceiver 630 may further include an antenna, and there may be one or more antennas.

Optionally, the communication device 600 may specifically be the ambient power-enabled Internet of Things device of the embodiments of the present application, and the communication device 600 may implement the corresponding processes implemented by the ambient power-enabled Internet of Things device in each method of the embodiment of the present application, which will not be repeated here for the sake of brevity.

Optionally, the communication device 600 may specifically be the network device of the embodiments of the present application, and the communication device 600 may implement the corresponding processes implemented by the network device in each method of the embodiments of the present application, which will not be repeated here for the sake of brevity.

FIG. 11 is a schematic structural diagram of a chip of the embodiments of the present application. The chip 700 illustrated in FIG. 11 includes a processor 710. The processor 710 may call a computer program from a memory and run the computer program, to implement the methods in the embodiments of the present application.

Optionally, as illustrated in FIG. 11, the chip 700 may further include a memory 720. The processor 710 may call a computer program from the memory 720 and run the computer program, to implement the methods in the embodiments of the present application.

Here, the memory 720 may be a separate device independent of the processor 710, or may be integrated into the processor 710.

Optionally, the chip 700 may further include an input interface 730. The processor 710 may control the input interface 730 to communicate with other devices or chips, and specifically, may control the input interface 730 to acquire information or data transmitted by other devices or chips.

Optionally, the chip 700 may further include an output interface 740. The processor 710 may control the output interface 740 to communicate with other devices or chips, and specifically, may control the output interface 740 to output information or data to other devices or chips.

Optionally, the chip may be applied to the network device in the embodiments of the present application, and the chip may implement the corresponding processes implemented by the network device in each method of the embodiments of the present application, which will not be repeated here for the sake of brevity.

Optionally, the chip may be applied to the ambient power-enabled Internet of Things device in the embodiments of the present application, and the chip may implement the corresponding processes implemented by the ambient power-enabled Internet of Things device in each method of the embodiments of the present application, which will not be repeated here for the sake of brevity.

It should be understood that the chip mentioned in the embodiments of the present application may also be called a system-level chip, a system chip, a chip system or a system-on-chip chip, or the like.

FIG. 12 is a schematic block diagram of a communication system 900 provided in the embodiments of the present application. As illustrated in FIG. 12, the communication system 900 includes an ambient power-enabled Internet of Things device 910 and a network device 920.

The ambient power-enabled Internet of Things device 910 may be used to implement the corresponding functions implemented by the ambient power-enabled Internet of Things device in the above method, and the network device 920 may be used to implement the corresponding functions implemented by the network device in the above methods, which will not be repeated here for the sake of brevity.

It should be understood that the processor in the embodiments of the present application may be an integrated circuit chip with signal processing capabilities. In the implementation process, each step in the above method embodiments may be completed by an integrated logic circuit of hardware in a processor or instructions in a software form in the processor. The above processor may be a general purpose processor, a digital signal processor (DSP), an application specific integrated circuit (ASIC), a field programmable gate array (FPGA) or other programmable logic device, a discrete gate, a transistor logic device, or a discrete hardware component, which may implement or perform the methods, steps and logic block diagrams disclosed in the embodiments of the present disclosure. The general purpose processor may be a microprocessor, or the processor may be any conventional processor. The steps of the methods disclosed in conjunction with the embodiments of the present application may be directly implemented as being performed by the hardware decoding processor, or may be implemented by a combination of the hardware and software modules in the decoding processor. The software module may be located in a random memory, a flash memory, a read-only memory, a programmable read-only memory, an electrically erasable programmable memory, a register, or other mature storage media in the art. The storage medium is located in the memory, and the processor reads the information in the memory and completes the steps of the above method in combination with its hardware.

It will be understood that the memory in the embodiments of the present application may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), which is used as an external cache. As an example but not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM). It should be noted that the memories of the systems and methods described herein are intended to include, but are not limited to, these and any other suitable types of memories.

It should be understood that the above memory is illustrative but not limited illustration. For example, the memory in the embodiments of the present application may be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (Direct Rambus RAM, DR RAM). That is, the memories in the embodiments of the present application are intended to include, but are not limited to, these and any other suitable types of memories.

The embodiments of the present application further provide a computer-readable storage medium for storing a computer program.

Optionally, the computer-readable storage medium may be applied to the network device in the embodiments of the present application, and the computer program enables a computer to perform the corresponding processes implemented by the network device in the various methods in the embodiments of the present application, which will not be repeated here for the sake of brevity.

Optionally, the computer-readable storage medium may be applied to the ambient power-enabled Internet of Things device in the embodiments of the present application, and the computer program enables a computer to perform the corresponding processes implemented by the ambient power-enabled Internet of Things device in the various methods of the embodiments of the present application, which will not be repeated here for the sake of brevity.

The embodiments of the present application further provide a computer program product including computer program instructions.

Optionally, the computer program product may be applied to the network device in the embodiments of the present application, and the computer program instructions enable a computer to perform the corresponding processes implemented by the network device in the various methods of the embodiments of the present application, which will not be repeated here for the sake of brevity.

Optionally, the computer program product may be applied to the ambient power-enabled Internet of Things device in the embodiments of the present application, and the computer program instructions enable a computer to perform the corresponding processes implemented by the ambient power-enabled Internet of Things device in the various methods of the embodiments of the present application, which will not be repeated here for the sake of brevity.

The embodiments of the present application further provide a computer program.

Optionally, the computer program may be applied to the network device in the embodiments of the present application. The computer program that, when performed on a computer, enables the computer to perform the corresponding processes implemented by the network device in the various methods in the embodiments of the present application, which will not be repeated here for the sake of brevity.

Optionally, the computer program may be applied to the ambient power-enabled Internet of Things device in the embodiments of the present application. The computer program that, when performed on a computer, enables the computer to perform the corresponding processes implemented by the ambient power-enabled Internet of Things device in the various methods of the embodiments of the present application, which will not be repeated here for the sake of brevity.

Those of ordinary skill in the art will appreciate that units and algorithm steps of all examples described in conjunction with the embodiments disclosed herein may be implemented by electronic hardware, or by a combination of computer software and electronic hardware. Whether these functions are performed in hardware or software depends on the specific application and design constraints of the technical solutions. A skilled person may use different methods to implement the described functions for each specific application, but such implementation should not be considered beyond the scope of the present application.

It may be clearly understood by those skilled in the art that, for convenience and brevity of the description, the specific operating processes of the system, apparatus/devices and units described above may refer to the corresponding processes in the above method embodiments, which will not be repeated here.

In several embodiments provided in the present application, it should be understood that the disclosed system, apparatuses/devices and methods may be implemented in other ways. For example, the apparatus/device embodiments described above are only schematic. For example, the division of the units is only division of logical functions, and there may be other division ways in the actual implementation, for example, a plurality of units or components may be combined or integrated into another system, or some features may be ignored or not implemented. In addition, the mutual coupling or direct coupling or communication connection between each other as illustrated or discussed may be indirect coupling or communicative connection of apparatus or units via some interfaces, which may be electrical, mechanical, or in other forms.

The units described as separation components may or may not be physically separated, and the components shown as units may or may not be physical units, that is, they may be located in one place, or may be distributed onto a plurality of network units. Some or all of the units may be selected according to actual requirements to implement the purpose of the schemes of the embodiments.

In addition, various functional units in the various embodiments of the present application may be integrated into one processing unit, or various units may exist physically separately, or two or more units may be integrated into one unit.

If being implemented in the form of a software functional unit and sold or used as an independent product, the functions may be stored in a computer-readable storage medium. Based on such an understanding, the technical solution of the present application, in essence or a part of the technical solutions that contribute to a prior art or a part of the technical solutions, may be embodied in the form of a software product, and the computer software product is stored in a storage medium and includes several instructions for enabling a computer device (which may be a personal computer, a server, a network device, or the like) to perform all or a part of the steps of the methods described in various embodiments of the present application. The aforementioned storage media includes a USB flash drive (U disk), a mobile hard disk, a read-only memory (ROM), a random access memory (RAM), a disk, an optical disk, and other mediums capable of storing program codes.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A wireless communication method, comprising:
receiving, by an ambient power-enabled Internet of Things device, first indication information, wherein the first indication information is used for indicating access control information of a target cell or a target basic service set (BSS).

2. The method according to claim 1, wherein the first indication information is used for indicating whether the ambient power-enabled Internet of Things device is prohibited from accessing the target cell or the target BSS.

3. The method according to claim 2, wherein different status values of the first indication information are used for indicating whether the ambient power-enabled Internet of Things device is prohibited from accessing the target cell or the target BSS.

4. The method according to claim 1, wherein the first indication information is used for indicating whether an ambient power-enabled Internet of Things device of a target type is prohibited from accessing the target cell or the target BSS.

5. The method according to claim 4, wherein different status values of the first indication information are used for indicating whether the ambient power-enabled Internet of Things device of the target type is prohibited from accessing the target cell or the target BSS.

6. The method according to claim 4 or 5, wherein the ambient power-enabled Internet of Things device of the target type comprises one of following types:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

7. The method according to any one of claims 2 to 6, wherein the first indication information is 1 bit.

8. The method according to claim 1, wherein the first indication information is used for indicating access control information of ambient power-enabled Internet of Things devices of multiple types.

9. The method according to claim 8, wherein the first indication information indicates the access control information of the ambient power-enabled Internet of Things devices of the multiple types via bit mapping.

10. The method according to claim 9, wherein the first indication information comprises multiple bits, each bit corresponds to an ambient power-enabled Internet of Things device of one type, and a value of each bit is used for indicating whether the ambient power-enabled Internet of Things device of the corresponding type is prohibited from accessing the target cell or the target BSS.

11. The method according to claim 8, wherein different status values of the first indication information are used for indicating that ambient power-enabled Internet of Things devices of different types in the multiple types are allowed to access the target cell or the target BSS, and/or that ambient power-enabled Internet of Things devices of different types in the multiple types are prohibited from accessing the target cell or the target BSS.

12. The method according to any one of claims 8 to 11, wherein the ambient power-enabled Internet of Things devices of the multiple types comprise at least two of following types:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

13. The method according to any one of claims 1 to 12, wherein the first indication information is transmitted via a broadcast channel.

14. The method according to any one of claims 1 to 13, wherein the first indication information is transmitted via a master information block (MIB) or a beacon frame.

15. The method according to any one of claims 1 to 12, further comprising:
reporting, by the ambient power-enabled Internet of Things device, capability information of the ambient power-enabled Internet of Things device.

16. The method according to claim 15, wherein the capability information of the ambient power-enabled Internet of Things device comprises at least one of:
whether the ambient power-enabled Internet of Things device supports backscattering, whether the ambient power-enabled Internet of Things device supports active transmission, whether the ambient power-enabled Internet of Things device has power storage capability, a level of power storage capability of the ambient power-enabled Internet of Things device, a type of power used by the ambient power-enabled Internet of Things device for power harvesting, or a type of network providing a service for the ambient power-enabled Internet of Things device.

17. The method according to any one of claims 1 to 16, further comprising:
accessing, by the ambient power-enabled Internet of Things device, the target cell or the target BSS according to the first indication information.

18. A wireless communication method, comprising:
transmitting, by a network device, first indication information, wherein the first indication information is used for indicating control information enabling an ambient power-enabled Internet of Things device to access a target cell.

19. The method according to claim 18, wherein the first indication information is used for indicating whether the ambient power-enabled Internet of Things device is prohibited from accessing the target cell or a target basic service set (BSS).

20. The method according to claim 19, wherein different status values of the first indication information are used for indicating whether the ambient power-enabled Internet of Things device is prohibited from accessing the target cell or the target BSS.

21. The method according to claim 18, wherein the first indication information is used for indicating whether an ambient power-enabled Internet of Things device of a target type is prohibited from accessing the target cell or the target BSS.

22. The method according to claim 21, wherein different status values of the first indication information are used for indicating whether the ambient power-enabled Internet of Things device of the target type is prohibited from accessing the target cell or the target BSS.

23. The method according to claim 21 or 22, wherein the ambient power-enabled Internet of Things device of the target type comprises one of following types:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

24. The method according to any one of claims 19 to 23, wherein the first indication information is 1 bit.

25. The method according to claim 18, wherein the first indication information is used for indicating access control information of ambient power-enabled Internet of Things devices of multiple types.

26. The method according to claim 25, wherein the first indication information indicates the access control information of the ambient power-enabled Internet of Things devices of the multiple types via bit mapping.

27. The method according to claim 26, wherein the first indication information comprises multiple bits, each bit corresponds to an ambient power-enabled Internet of Things device of one type, and a value of each bit is used for indicating whether the ambient power-enabled Internet of Things device of the corresponding type is prohibited from accessing the target cell or the target BSS.

28. The method according to claim 25, wherein different status values of the first indication information are used for indicating that ambient power-enabled Internet of Things devices of different types in the multiple types are allowed to access the target cell or the target BSS, and/or that ambient power-enabled Internet of Things devices of different types in the multiple types are prohibited from accessing the target cell or the target BSS.

29. The method according to any one of claims 25 to 28, wherein the ambient power-enabled Internet of Things devices of the multiple types comprise at least two of:
an ambient power-enabled Internet of Things device supporting backscattering, an ambient power-enabled Internet of Things device supporting active transmission, an ambient power-enabled Internet of Things device supporting backscattering and active transmission, an ambient power-enabled Internet of Things device without power storage capability, or an ambient power-enabled Internet of Things device with power storage capability.

30. The method according to any one of claims 18 to 29, wherein the first indication information is transmitted via a broadcast channel.

31. The method according to any one of claims 18 to 30, wherein the first indication information is transmitted via a master information block (MIB) or a beacon frame.

32. The method according to any one of claims 18 to 29, further comprising:
receiving, by the network device, capability information of the ambient power-enabled Internet of Things device reported by the ambient power-enabled Internet of Things device.

33. The method according to claim 32, wherein the capability information of the ambient power-enabled Internet of Things device comprises at least one of:
whether the ambient power-enabled Internet of Things device supports backscattering, whether the ambient power-enabled Internet of Things device supports active transmission, whether the ambient power-enabled Internet of Things device has power storage capability, a level of power storage capability of the ambient power-enabled Internet of Things device, a type of power used by the ambient power-enabled Internet of Things device for power harvesting, or a type of network providing a service for the ambient power-enabled Internet of Things device.

34. An ambient power-enabled Internet of Things device, comprising:
a communication unit, configured to receive first indication information, wherein the first indication information is used for indicating access control information of a target cell or a target basic service set (BSS).

35. A network device, comprising:
a communication unit, configured to transmit first indication information, wherein the first indication information is used for indicating access control information of a target cell or a target basic service set (BSS).

36. A communication device, comprising: a processor and a memory, wherein the memory is configured to store a computer program, and the processor is configured to call the computer program stored in the memory and run the computer program to perform the method according to any one of claims 1 to 17, or the method according to any one of claims 18 to 33.

37. A chip, comprising: a processor, configured to call a computer program from a memory and run the computer program, to enable a device equipped with the chip to perform the method according to any one of claims 1 to 17, or the method according to any one of claims 18 to 33.

38. A computer-readable storage medium, configured to store a computer program, wherein the computer program enables a computer to perform the method according to any one of claims 1 to 17, or the method according to any one of claims 18 to 33.

39. A computer program product, comprising computer program instructions, wherein the computer program instructions enable a computer to perform the method according to any one of claims 1 to 17, or the method according to any one of claims 18 to 33.

40. A computer program, enabling a computer to perform the method according to any one of claims 1 to 17, or the method according to any one of claims 18 to 33.
